# EUROPEAN PATENT APPLICATION

(11) **EP 3 070 618 A1**
(43) Date of publication of application: **21.09.2016**
(21) Application number: 15160075.6
(22) Date of filing: 20.03.2015
(51) Int. Cl.: G06F 17/30, H04W 4/02, H04W 4/18

(54) **Computer system and method for dynamic website instantiation**

(71) Applicant: Weller, Michael, 53125 Bonn (DE)
(72) Inventor: Weller, Michael, 53125 Bonn (DE)
(74) Representative: Bittner, Peter

(57) **Abstract**

A computer system (100), a computer-implemented method, and a computer program product for dynamic website instantiation. The computer system includes an interface component (110) which is configured to receive from a first code reader device (11) a first read notification (N1) indicating that a unique code (2*) is read for the very first time wherein the unique code (2*) includes a reference to a URL portion in combination with an identifier number; and to further receive from the first reader device (11) location data (L1) indicating a particular physical location which is associated with the first read notification (N1). Further, a generator component (120) of the computer system is configured to generate, based on the unique code (2*), a particular URL in relation to the particular physical location, the particular URL instantiating a website for the particular physical location. A data storage component (140) of the computer system is configured to persist an association (142) of the unique code (2*) with the received location data (L1).

## Description

### Technical Field

The present invention generally relates to electronic data processing, and more particularly, relates to methods, computer program products and systems for website instantiation.

### Background

Current solutions for location tagging allow attaching pre-manufactured physical tags to corresponding locations wherein the pre-manufactured tags include information about how to reach a website which provides additional information regarding the respective locations. Tags which are often used for this purpose are Quick Response (QR) code tags, bar code tags, RFID tags or the like. Typically, the code persisted on the tag has the information which enables access to the respective website with a mobile device having an appropriate reader to decode the code stored on the tag.

However, such solutions always require the setup of the website before the production and deployment of the tags and therefore lack flexibility with regards to the use and production of tags and their association with specific web content.

### Summary

There is therefore a need to provide systems and methods to make such tagging procedures more flexible and to allow dynamic creation of websites on demand in response to the use of pre-manufactured tags. Website as used hereinafter relates to one or more web pages which are joined together. Examples of types of websites are Weblogs, Wikis, content management systems, social networking sites, etc.

The solution to this technical problem is provided by the features as claimed by the independent claims. Embodiments of the invention are a computer system for dynamic website instantiation and a respective computer-implemented method executed by the computer system when running a corresponding computer program product.

The computer system for dynamic website instantiation has an interface component which is configured to receive from a first code reader device a first read notification indicating that a unique code is read for the very first time wherein the unique code includes a reference to a URL portion in combination with an identifier number.

In one embodiment, the unique code can be generated by a code generator which is part of the computer system. In an alternative embodiment the code generator can be external to the computer system but is communicatively coupled with the computer system so that generated unique codes can be communicated to the computer system (e.g., via the interface component). The unique code is generated in such a way that any generated identifier number differs from any previously generated identifier number. For example, the URL portion can relate to a domain associated with the computer system. The identifier number may be a sequential number which can be concatenated with the URL portion resulting in the unique code. Initially, this generated code is meaningless. That is, it is not related to any real instance of a website associated with the URL portion. In other words, the unique code has no meaning in the real world at the time it is generated. The unique code can then be persisted on a physical tag. For example, the tag can be a physical plaque or sheet on which the unique code is printed as a QR code or bar code or the tag may be a physical radio frequency identifier (RFID) tag which carries the code in a respective memory portion of the RFID tag. Any other appropriate physical tag to carry the code may be used. Hashing mechanisms may further be used to secure the code generation against falsification. The physical tag is then attached to a real world object at a real world location. For example, the tag is attached to an information sign of a tourist site or to an object in a museum. Any object permanently associated with a real world location can be used for this purpose.

For example, the person who deploys the tag to the physical location can carry the first code reader device and use the first code reader to scan the unique code persisted on the tag right after the deployment of the tag. In this case the first code reader would read the unique code for the very first time. However, it is not necessary that the person deploying the physical tag has the first code reader. Any other person scanning the unique code for the very first time after it had been deployed to the physical location would also generate the first read notification which is then sent by the first code reader to the computer system. The first code reader decodes the unique code and recognizes the URL portion in the code which allows the first code reader to identify the computer system which is supposed to receive the unique code data.

Further, the interface component is configured to receive from the first reader device location data indicating a particular physical location which is associated with the first read notification. That is, the first code reader has a capability to determine the particular physical location at which the first read notification is generated. For example, the first code reader may have a GPS module which can determine geo-coordinates. In this example, the geo-coordinates correspond to the received location data. Other methods for determining geo-location data, such as triangulation methods based on cell signals used for mobile telephone communication or based on WLAN signals may be used instead. Location data does not need to be geo-coordinates but can also be just names of the respective location. For example, the user may enter such a name (e.g., Eiffel Tower, Tower Bridge, Mount Rushmore, etc.) on the first code reader device. The first code reader device may prompt its user to input such location data with appropriate I/O means. For example, a specific application running on the first code reader device may have list of potential location names from which the user can select the appropriate name and transmit such location data to the computer system. It makes no difference whether the unique code data and the respective location data is sent in a single message or in separate messages. In the case of using separate messages a session indicator can be used in the messages to indicate that the messages belong to the same session providing associated unique code and location data.

The computer system further has a generator component to generate, based on the unique code, a particular URL in relation to the particular physical location. This particular URL instantiates a website for the particular physical location. For this purpose the generator can check the received notification from the first code reader device to find out whether it is really a first read notification indicating that the unique code was read for the very first time. For this purpose, the computer system further includes a data storage component to persist associations of unique codes with their corresponding location data whenever such unique code data is received by the computer system for the very first time. That is, once the first code reader has transmitted the unique code data to the computer system, the system can check if a corresponding entry already exists in the data storage component. If not, then the received notification is a first read notification for this unique code. In this case, the computer system composes a complete URL based on the received URL portion and the unique identifier. It is to be noted that, at the time when the first read notification is received, the unique code is still without any meaning and no corresponding website exists. However, once the computer system detects a first read notification it instantiates a website for the completed URL and thereby creates at least one web page for the particular physical location which relates to the receive location data. Instantiating in general means to represent an abstraction by a concrete instance. In the context of present disclosure the abstraction is the initially meaningless URL which is generated based on the received unique code and the real instance is at least one web page which is generated in such a way that it can be accessed through the Internet via the generated complete URL.

The association of the unique code with the received location data is then persisted in the data storage component to make sure that any later received read notification of the unique code is not classified as a first read notification any more.

In one embodiment, the computer system further has an authorization component which can provide, in response to the first read notification, to a user of the first reader device administration rights with regards to the website associated with the generated URL. That is, the user who performs the first read action on the tag with the unique code, which at that time has no meaning yet, is becoming the administrator for the to be generated website. For example, the user may attach the tag to a location for which the user wants to create a digital guestbook. Once the tag is attached to the right physical location the user can scan the respective unique code which is the recognized by the computer system as a first read notification. Upon instantiation of the respective website the user receives the administrations rights for the website allowing the user to modify the website as generated by the computer system by, for example, changing the content of the system generated page(s) adding new pages with user defined content defining access rights to the website for such users who may scan the unique code at a later point in time.

In one embodiment, the interface component can receive a second read notification from a second code reader device indicating that the unique code is read at least a second time. The computer system then recognizes that the received second read notification is directed to an already instantiated (already existing) website. The authorization component may, in response to the second read notification, provide to the second reader device access rights to the particular URL associated with the instantiated website. The access rights for the second and later users of the unique code tag can be generated by default by the computer system as read and write access for the initially instantiated web page and can be modified by the administrator user at any time. For example, the administrator user or the computer system may create a homepage of a guestbook associated with the physical location of the tag which includes specific information about the location (e.g., touristic guide information). For this home page only read access may be assigned to second and later users. From the home page specific sub-pages of the website may be accessible via respective links where the second and later users can make their own entries (e.g., written comments, photo, video or audio file uploads, etc.) For such sub-pages read and write permissions can be assigned to the second or later users.

There may be a need to technically prevent the creation of website entries for users who are not physically present at the current location of the physical tag. For example, users who did not visit the location of the tag but who want to simply add entries to the website should not be allowed to do so. For this purpose, the authorization component can prevent access to the particular URL when an access request is received which is not generated in response to a read notification based on the unique code generated by a code reader. In other words, if the access request is sent from home computer or from a computer in an internet café or from a mobile device without having read the unique code of physical tag at the physical location the request can be dismissed or ignored. For example, the reader application of the reader device can include an indicator in the generated read notification which indicates that the read notification was actually generated in response to a code read operation of the reader device. This indicator can then be evaluated by the computer system (e.g., the authorization component) and deny access for any access request lacking this indicator.

Further aspects of the invention will be realized and attained by means of the elements and combinations particularly depicted in the appended claims. It is to be understood that both, the foregoing general description and the following detailed description are exemplary and explanatory only and are not restrictive of the invention as described.

### Brief Description of the Drawings

FIG. 1 is a simplified block diagram of a scenario including a computer system for dynamic website instantiation according to an embodiment of the invention;
FIG. 2 is a simplified block diagram illustrating a use scenario of the instantiated website by a later user according to an embodiment of the invention;
FIG. 3 is a simplified flowchart of a computer-implemented method for dynamic website instantiation and later use according to embodiments of the invention;
FIG. 4 is a simplified flowchart of an encoding method which can be used according to one embodiment of the invention when generating a unique code;
FIG. 5 is a simplified flowchart illustrating decoding steps performed by the computer system according to one embodiment of the invention when receiving an encoded unique code; and
FIG. 6 is a diagram that shows an example of a generic computer device and a generic mobile computer device, which may be used with the techniques described herein.

### Detailed Description

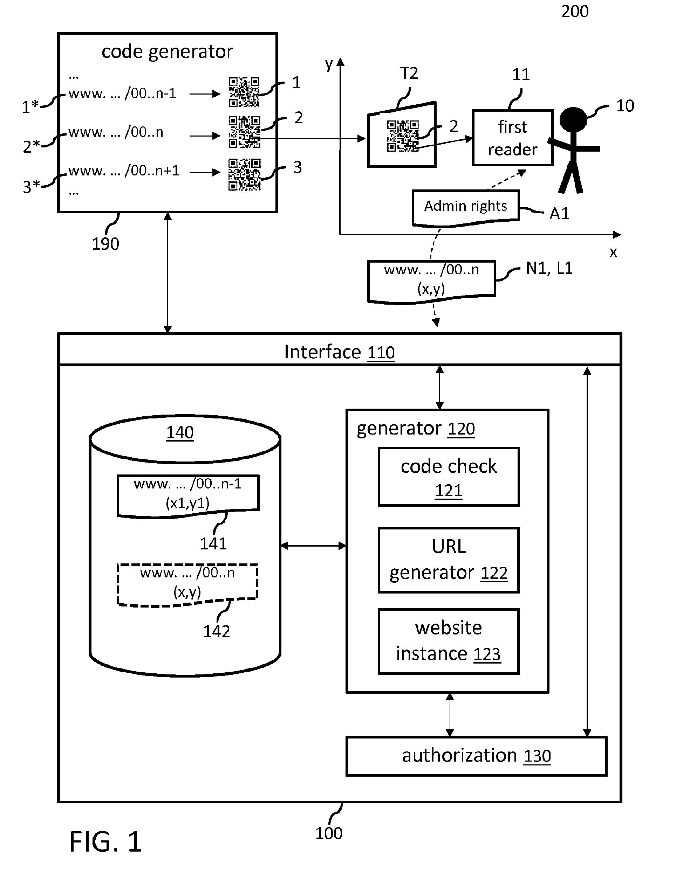

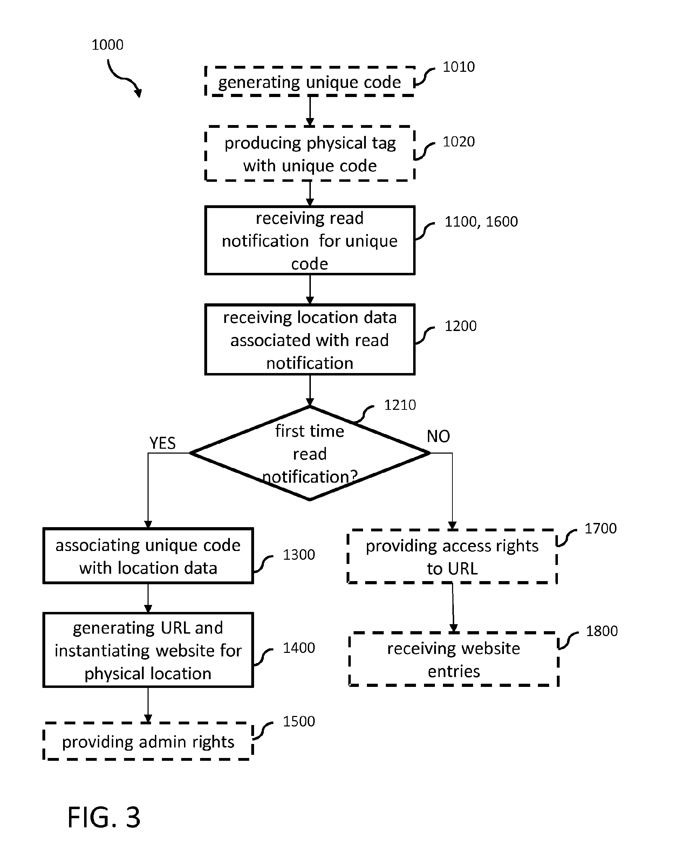

FIG. 1 shows a simplified block diagram of a scenario including a computer system 100 for dynamic website instantiation according to an embodiment of the invention. The scenario is explained in the context of the simplified flowchart of FIG. 3. The flowchart illustrates the steps of computer-implemented method 1000 performed by the computer system 100. Optional steps are illustrated with dashed lines. The following description refers to reference numbers of FIG. 1 and FIG. 3.

The scenario of FIG. 1 further includes a code generator 190 which can be a separate component or an integral part of the computer system 100. In one embodiment, the code generator 190 may be communicatively coupled with the computer system 100. The code generator 190 is configured to generate 1010 unique codes encoding a portion of a uniform resource locator (URL) concatenated with an identifier number. At the point in time the code generator generates the unique code the unique code is meaningless. The portion of the unique code corresponding to a URL portion such as www.test_xy.eu (illustrated by www.... ) represents the address of an existing internet resource (e.g., a server computer hosting the website www.test_xy.eu). However, this address is combined with a generated identifier number to form the unique code. The identifier number can be a sequential (serial) number, or any other number generated by any algorithm (e.g., a counter algorithm) which ensures that a new generated identifier number differs from all previously generated identifier numbers. Therefore the codes are all unique despite using the same URL portion. For all unique codes using the same URL portion. Also random numbers may serve for the purpose of generating the identifier number when selected from a number space much larger than the maximum (or expected) number of objects to be identified. Although not really unique, some identifiers of this type may be appropriate for identifying objects in many practical applications and are, with abuse of language, still referred to as "unique".

FIG. 1 illustrates an example, where the identifier number portion is incremented by 1 (any other increment may be used) with every unique code generation step. As a result, three consecutively generated unique codes can be illustrated as 1*:www.... /00..n-1, 2*:www.... /00..n, 3*:www.... /00..n+1. The generated unique codes for the above example may be ..., www.test_xy.eu/000101, www.test_xy.eu/000102, www.test_xy.eu/000103, ...

The generated unique codes are encoded into a machine readable format. The example shows unique codes being encoded as QR codes 1, 2, 3. A QR code is a two-dimensional barcode or a matrix of barcodes. Any other machine readable format, such as for example, linear barcodes, RFID codes, acoustic codes may be used instead. By using the encoded representations 1, 2, 3 of the generated unique codes, physical tags can be produced for persisting the unique codes in a way that they can be read by respective reader devices. For example, a QR code can be read by a corresponding QR code reader device. Many mobile devices, such as smartphones or tablet computers, can run software applications which are able to scan the QR code by using a built-in camera of the device and running decoding software which is configured to derive from the encoded representation 1, 2, 3 the corresponding original unique codes 1*:www.... /00..n-1, 2*:www.... /00..n, 3*:www. ... /00..n+1. A person skilled in the art can transfer this concept to other types of physical tags like linear barcode reader devices, RFID reader devices or acoustic code reader devices.

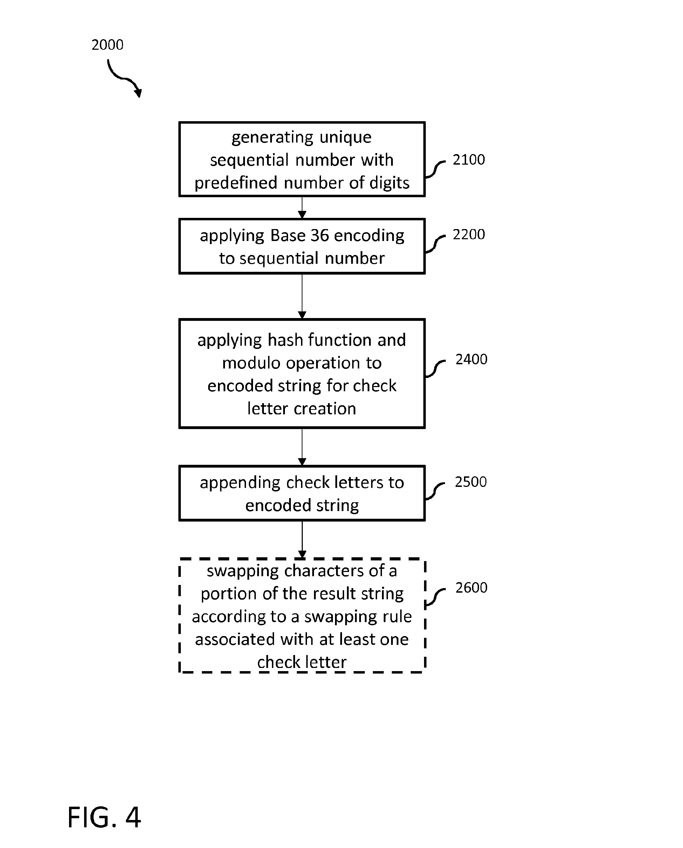

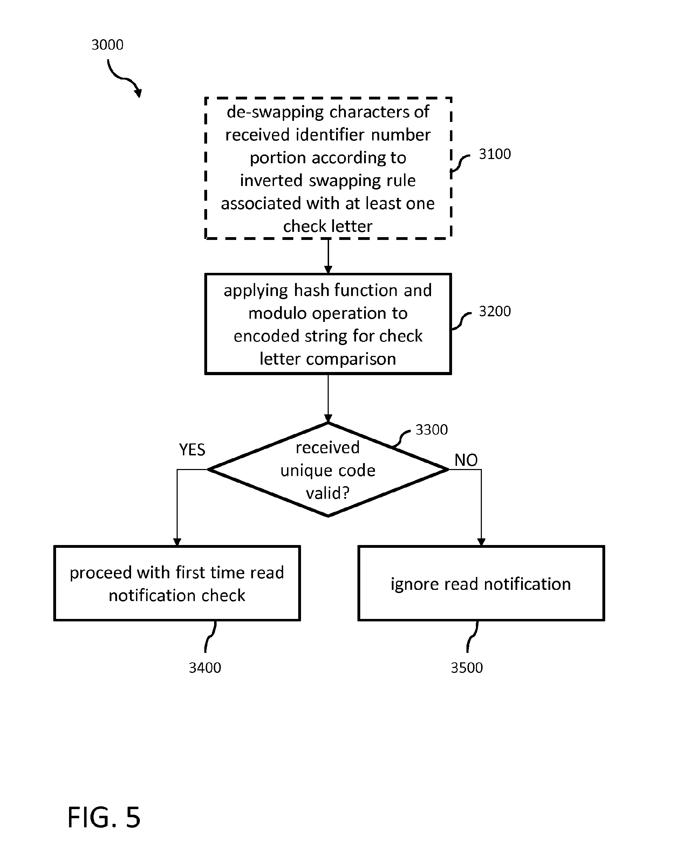

In one embodiment, the code generator 190 may provide the generated unique codes to the computer system 100 to make the computer system 100 aware of any generated unique code which may be deployed on a physical tag T2. In this embodiment, when receiving a particular unique code via the interface 110, the computer system 100 can verify the validity of the unique code by comparing the received code with the generated codes. In another embodiment (cf. FIGs. 4, 5), the computer system can verify the validity of the particular unique code without being communicatively coupled with the code generator by using encoding and corresponding decoding methods. An appropriate code reader device can read and decode the machine readable representations of the unique code. As shown in the above examples, the representations 1, 2, 3 of the unique code may be suitable for optical (e.g., QR code, barcode), electromagnetic (RFID code) or acoustic code reader devices.

At the time, when this unique code is generated no internet resource exists which has an address corresponding to the combined URL portion and identifier number. In other words, in many prior art solutions QR codes are pre-fabricated in large quantities (e.g., on advertisement posters or products) for directing users to a particular existing website when being scanned with a smartphone or a similar code reader device. According to embodiments of the invention, the physical tags persisting the generated unique codes have no existing target when they are produced.

The following example will be based on QR codes without the intention to be limiting in any way with regards to the used encoding mechanism for persisting the unique codes.

In the example, the physical tag T2 is produced 1020 to persist the QR code 2 representing the unique code 2*. The production of the physical tag can be at a remote location without any interaction with the computer system 100. The physical tag T2 is then deployed to a real world physical location. The physical location is represented by its geo-coordinates (x,y). However, other representations (or identifications) of a location may be used as well, such as for example, the name of a location or the address of location. For example, the physical tag T2 can be attached to a permanent real world object at the physical location (e.g., a wall or a pillar of a building, a sign attached to a rock, etc.). In the example, the user 10 (tag deployment user) may request the unique code www.... /00..n from the code generator 190 and receive the corresponding physical tag T2. Various deployment alternatives for the physical tags are possible. In one embodiment, the tags may be fabricated on long-lasting materials such as plastic or metal plaques with a cover to protect the encoded representations of the unique code from damages through environmental conditions (rain, sun, etc.). In another embodiment, the user 10 may download the encoded representations and produce the physical tag T2 himself, (e.g., by printing the downloaded QR code).

The user 10 has first code reader device 11 which is configured to read and decode the encoded representation 2 of the unique code on the physical tag T2. For example, the first code reader device 11 may be part of a smartphone or tablet computer with a camera and a corresponding QR code reader software application. Once the first code reader device has decoded the encoded representation 2 for the very first time, a parser of the first code reader device 11 can identify the URL portion corresponding to the address of a respective internet resource (e.g., server www.test_xy.eu). In the example, this address is associated with the computer system 100.

The first code reader device 11 further has a communication function which allows the first code reader device 11 to establish a connection to the Internet. For example, an integrated mobile communication function using a wireless communication standard, such as for example, the GSM, UMTS or LTE standards may be used. In another embodiment, a wireless communication function using wireless local area network (WLAN) may be used. The first code reader device 11 can then send a first read notification N1 to the identified Internet resource (computer system 100). The first read notification indicates to the computer system 100 that the unique code 2*:www.... /00..n was read for the very first time from the physical tag T2 because the unique code is not yet persisted in the computer system 100. Actually, it is determined by the computer system 100 upon receipt of the first read notification N1 hat the unique code was read for the very first time. The first code reader device 11 on its own cannot know whether the code has already been read earlier by another code reader device.

Further, the first code reader 11 has the capability to determine location data L1 associated with the particular physical location (x,y) of the physical tag T2 at which the first read notification N1 is generated. For example, the first code reader 11 may have a GPS module which can determine geo-coordinates corresponding to the location data L1. Other methods for determining geo-location data, such as triangulation methods based on cell signals used for mobile telephone communication or based on WLAN signals may be used instead. However, the location data L1 does not need to include geo-coordinates but can include location indicator which is appropriate to unambiguously identify the physical location of the physical tag T2. For example, the name of the respective location may be used. For example, the user 10 may enter such a name (e.g., Eiffel Tower, Tower Bridge, Mount Rushmore, etc.) on the first code reader device. The first code reader device 11 may prompt the user 10 to input such location data with appropriate I/O means. For example, a specific application running on the first code reader device 11 may have list of potential location names from which the user can select the appropriate name and transmit such location data L1 to the computer system 100. In this example, the location data L1 determined by the first code reader corresponds to the selected location name. The location data L1 can be sent together with the unique code data in a single message (e.g., as part of the first read notification N1) or in separate messages. In the case of using separate messages a session indicator can be used in the messages to indicate that the messages belong to the same session providing associated unique code data 2* and location data L1.

The computer system 100 has an interface 110 which is configured to communicate with the first code reader device 11. Via the interface 110, the computer system 100 receives 1100 the first read notification N1 and further receives 1200 the location data L1 associated with the first read notification N1.

A code check component 121 checks 1210 the received read notification N1 to verify whether it actually is a first read notification in the sense that the unique code on the physical tag T2 is read for the very first time. The example embodiment of FIG. 1 shows the code checker 121 as a sub-component of the generator 120. However, the code checker can also be implemented as a separate component within the computer system 100.

For verifying a first read notification, the computer system 100 further has a data storage component 140 where associations 142 between unique codes and their respective location data are persisted upon receipt of a corresponding first read notification. In the example, the already persisted association 141 indicates that a first read notification for the unique code www.... /00..n-1 with the location data (x1 ,y1) was received by the computer system already in the past. When the code checker 121 receives 1100 the read notification N1 for the unique code www.... /00..n with the location data L1 (x,y), the code checker queries the data storage component 140 with the database of already persisted associations for the unique code www..../00..n. At the time the read notification N1 is received no corresponding entry is included in the persisted association database. As a consequence, the code checker 121 derives that the read notification N1 is a real first time read notification with regards to the unique code of the code tag T2. The association 142 of the unique code and the associated location data L1 is then persisted in the association database. The entry in the association database makes sure that future read notifications related to the unique code 2*:www.... /00..n will not be regarded as first time read notifications.

After the code checker 121 has validated the first read notification N1 a URL generator component 122 of the computer system 100 generates 1400 a particular URL in relation to the particular physical location (x,y) of the code tag T2. The generated URL substantially corresponds to the received unique code of the first read notification. The generator component 122 may add further path information to the URL portion and the identifier number and compose a complete URL for which the computer system automatically instantiates a website 123 with at least one web page. The association 142 ensures that the new web page instance 123 which is accessible over the Internet under the generated URL is tied to (associated with) the physical location corresponding to the received location data L1. The instantiation or generation of the web page instance can, for example, use a web page template which is copied to a memory portion of the computer system accessible through the generated URL.

The originally meaningless unique code is now associated with a URL through which a website can be accessed which is associated with the location data of the physical location to which the unique code was deployed in the real world. As a consequence, there is no need at all to make any predictions or assumptions about the future use of such a unique code at the time when the unique code is generated or the code tag is produced. The later use of the unique code is determined dynamically by the user when deploying the unique code to the physical location and performing a first time read action of the code. The computer system which is configured to instantiate the website for the physical location is automatically determined by the code reader device when parsing the unique code and identifying the respective URL portion. Further, at least one web page for the website is automatically generated in such a way that it can be accessed under the URL which is automatically generated based on the unique code as read by the code reader device. Whereas in prior art systems code tags are always manufactured for existing websites to which the user is simply directed when reading the code, embodiments of the invention allow to generate a new website on the fly and assign it to a corresponding code tag location when the unique code is read for the very first time. This improves the flexibility of the use of code tags and reduces the amount of time required to create location specific websites.

In one embodiment, the computer system 100 further has an authorization component 130 which is configured to provide 1500 administration rights A1 for the instantiated website 123 to the user 10 of the first reader device 11 in response to the first read notification N1. The user 10 may receive login data from the authorization component 130 allowing the user to log into the URL of the instantiated website and create additional web pages or modify the content of the automatically instantiated web page(s). This enables the admin user 10 to develop a full web application for the URL which was generated by the generator 120 based on the originally meaningless unique code and to make this application available to any subsequent user performing subsequent (later) read actions of the unique code.

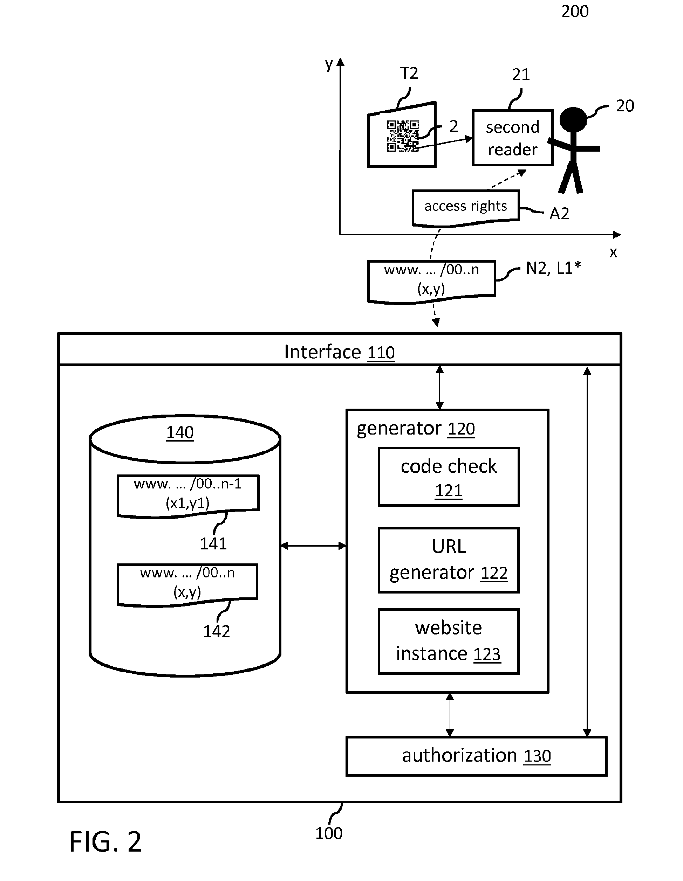

FIG. 2 is a simplified block diagram illustrating a use scenario of the instantiated website by a later user 20 according to an embodiment of the invention. Also FIG. 2 is described in the context of the method steps shown in FIG. 3.

The later user 20 has a second code reader device 21, which is configured in a similar way as the earlier described first code reader device. The later user 20 uses the second code reader 21 to read and decode the QR code 2 of the code tag T2 at the physical location of the code tag T2. For example, the later user 20 may be a tourist visiting a castle. The first user 10 may have attached the code tag T2 to the entrance of the castle and the later user 20 is now standing in front of the entrance and may use his or her smartphone to read the QR code. The second code reader 21 decodes the QR code and determines the corresponding unique code which is sent to the computer system 100 with a second read notification (N2). Further, the second code reader 21 can optionally determine the location data L1* corresponding to the physical location of the second code reader 21 when reading the code. The location data L1* is substantially the same as location data L1 determined by the first code reader 11 and corresponds to the location data of the code tag T2. However, there may be differences between the two location data values L1 and L1* dependent on the accuracy of the used location determination method. For example, the first code reader device 11 may have used a GPS sensor to determine the geo-coordinates of the physical tag T2. The second code reader device 21 may use a triangulation method based on the signals of cells of a mobile communication network to determine the location data L1*. Both determination methods may have different measurement accuracy, and, as a consequence, L1 may be different from L1*.

The computer system 100 receives 1600 the second read notification N2. Optionally, it may also receive the location data L1*. The code checker 121 now evaluates whether the second read notification corresponds to a unique code which is read for the very first time by querying the association database 140. In this case, the unique code www.... /00..n already exists in the entry for the persisted association 142. That is, the received second read notification N2 is not a first time read notification for the unique code but corresponds to a subsequent read event. The computer system 100 can now associate the second read notification N2 with the physical location of the code tag T2 based on the location data L1 stored in the respective association 142.

In an alternative embodiment, the computer system 100 may also receive the location data L1* obtained by the second code reader 21 (either together with the second read notification or in a related message). The code checker 121 may be configured to compare the received location data L1* with the location data L1 stored in the association 142. In case both location data values are substantially the same (i.e., L1* deviates from L1 within a predefined tolerance range) the computer system 100 has validated that the code tag T2 is still at its original place. However, if there is a significant difference between the location data values L1 and L1* (i.e., the difference between L1 und L1* is beyond the predefined tolerance range), the computer system 100 determines that the code tag T2 has either been removed from its original physical location (x,y) or the code reader was at a different location when reading the code (e.g., by reading a photo of the original QR code at a different location). In this case the computer system may reject the read notification as an invalid attempt to access the instantiated website or even invalidate the association 142 (e.g., by setting an invalid flag for the entry) and abort the process. For example, a response can be sent to the second code reader device indicating that the QR code 2 is invalid. The computer system may react in a different way when the second read notification is sent via the first code reader device 11 by the first user 10. In this case the authorization component recognizes that the administrator of the instantiated website is performing the read action and may allow changing the location data stored in the association 142. In other words, the computer system 100 can be configured to allow the administrator user 10 to reuse a previously used code tag T2 for a new purpose at a different location.

In case the code checker determines that the second read notification indicates that the unique code is read at least a second time the authorization component 130 can provide to the second reader device 21 access rights A2 to the particular URL in response to the second read notification N2. In other words, when the computer system receives read notifications for the unique code after the association 142 was persisted in the system the second code reader device 21 (e.g., smartphone) can be redirected to the instantiated website (e.g., the homepage of the website). For example, the corresponding web page can be automatically started by a web browser application running on the second code reader device 21. The access rights A2 may allow the later user 20 of the second reader device 21 to generate new entries for the instantiated website using the web browser application which are then received 1800 by the computer system 100 and stored in the website instance 123 (i.e., in the respective web page of the website instance). For example, the later user 20 may generate text entries on a guest book page related to the physical location (x,y), or upload pictures, videos or audio files to respective parts of the instantiated website 123. The access rights A2 may further allow modifying entries generated by the second code reader 21 but may prevent to modify any entries generated by other coder readers or users. The access rights may be tied to the second code reader device 21 or they may be tied to the later user 20 which provides more flexibility for the user in case of using multiple code reader devices (e.g., smartphone and tablet).

FIG. 4 is a simplified flowchart of an encoding method 2000 which can be used according to one embodiment of the invention when generating the unique code. For example, the method 2000 may be performed by the code generator 190 (cf. FIG. 1).

For generating the identifier number portion of the unique code, firstly a unique sequential number can be generated 2100 (e.g., by using a counter). This sequential number is then Base 36 encoded 2200. Base 36 is a positional numeral system using 36 as the radix. The choice of Base 36 is convenient in that the digits can be represented using the Arabic numerals 0-9 and the Latin letters A-Z (the ISO basic Latin alphabet). Base 36 is a compact case-insensitive alphanumeric numeral system using ASCII characters. Assuming that the sequential number has 8 digits, the size of the corresponding number range is: 36 to the power of 8 = 2.821.109.907.456. This allows the generation of a large number of unique codes. In the previously disclosed system it may occur that many code tags are used by users for test purposes without ever using the unique codes for real website instantiation. Using a sufficiently large number range still allows providing a sufficient number of code tags to users for real use scenarios.

For the Base 36 encoded string a SHA-256 hash is computed. A cryptographic hash function is a hash function which is considered practically impossible to invert, that is, to recreate the input data from its hash value alone. A person skilled in the art knows that the Secure Hash Algorithm (SHA) is a family of cryptographic hash functions published by the United States National Institute of Standards and Technology including among others the SHA-2 family of hash functions. The SHA-2 family includes the SHA-256 function which uses a word size of 32 bits.

On the hashed string, a 36*36 modulo operation is performed. In the example, the subsequent application 2400 of the hash function and the modulo operation results in two check characters (check letters or check digits) which are also Base 36 encoded. In the example, the two check letters are then appended 2500 to the Base 36 encoded eight character string resulting in a 10 digit key. In this example, the check letters ensure with a probability 1/(36*36) = 1/1269 that the key was generated by using the method 2000. That is, once the computer system 100 (cf. FIG. 1) receives a read notification including a unique code which was generated according to method 2000 it can validate the validity of the unique code (e.g., the ten digit key) by using the check letters included in the unique code. In such an embodiment, the computer system does not need to know in advance about the unique codes which were generated earlier by the code generator but can autonomously decide whether a received unique code is valid and should lead to a corresponding website instantiation when a respective first time ever read notification is received.

The 10 characters of the unique code in the example may further be swapped according to predefined swapping rules so that for a normal user the logic of the sequential numbers is not visible. In the above example, there can be 36 defined reversible swapping rules for the sequence of the first 9 characters of the 10 character string. For example, the last character (the second check letter, which is never swapped) corresponds to the number (0 to 35) of the swapping rule to be applied for reversing the swapped sequence of the remaining nine characters. When the code generator and the computer system share the knowledge about the swapping rules, the computer system can reverse the received swapped code and compute the original unique code which can then be validated by the respective check letters by computing the hash value for the 8 digit Base 36 code.

FIG. 5 is a simplified flowchart of a method 3000 illustrating the decoding steps performed by the computer system once having received a read notification which includes an identifier number which was generated according to the method disclosed in FIG. 4.

In the embodiment, where the swapping step 2600 (cf. FIG. 4) is performed at the end of the method 2000, the computer system 100 first performs a de-swapping step 3100 to reestablish the correct order of characters in the encoded string. In the example of FIG. 4 the last check letter (digit number 10) represents a number in the range of 0 to 35 which corresponds to the number of a swapping rule that was used by the code generator to perform the swapping step 2600. The computer system has the knowledge about the swapping rules and can therefore apply the corresponding inverted swapping rule to the swapped string. In the example, the inverted swapping rule is applied to the digits 1 to 9 of the 10 digit string. The result of the de-swapping step 3100 is the original eight digits representing the encoded sequential number and the two appended check letters (check digits).

The computer system can then apply 3200 the hash function and modulo operation to the encoded identifier number portion (e.g., digits 1 to 8) and compare 3300 the result with the check letters. If the computed hash value corresponds to the check letters the received unique code is valid and the system proceeds 3400 with the first time read notification check as disclosed in FIG. 3. If the received unique code turns out to be invalid the system ignores 3500 the received code and may send a corresponding message to the code reader which submitted the invalid code.

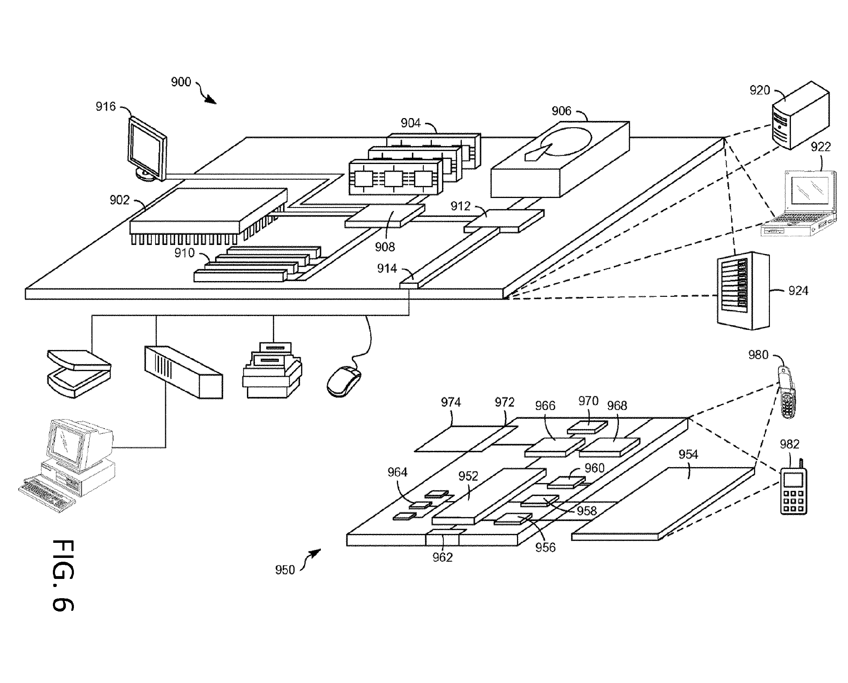

FIG. 6 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Generic computer device may 900 correspond to the computer system 100 of FIG. 1. Computing device 950 is intended to represent various forms of mobile devices, such as personal digital assistants, cellular telephones, smart phones, and other similar computing devices. Computing device 950 may include the reader device 11, 21 as shown in FIGs. 1 and 2. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for cooRInation of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the spirit and scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

## Claims

1. A computer system (100) for dynamic website instantiation, comprising:
an interface component (110) configured:
to receive, from a first code reader device (11), a first read notification (N1) indicating, for the very first time, a unique code (2*) wherein the unique code (2*) includes a reference to a URL portion in combination with an identifier number; and
to receive from the first reader device (11) location data (L1) indicating a particular physical location which is associated with the first read notification (N1);
a generator component (120) configured to generate, based on the unique code (2*), a particular URL in relation to the particular physical location, the particular URL instantiating a website for the particular physical location; and
a data storage component (140) configured to persist an association (142) of the unique code (2*) with the received location data (L1).

2. The computer system of claim 1, further comprising:
an authorization component (130) configured to provide, in response to the first read notification, to a user (10) of the first reader device (11) administration rights (A1) with regards to the particular URL.

3. The computer system of claim 2, wherein:
the interface component (110) is further configured to receive from a second code reader device (21) a second read notification (N2) indicating, for at least a second time, the unique code (2); and
the authorization component (130) is further configured to provide to the second reader device (21), in response to the second read notification (N2), access rights (A2) to the particular URL.

4. The computer system of claim 2 or 3, wherein the authorization component (130) is further configured to prevent access to the particular URL when an access request is received which is not generated in response to a read notification based on the unique code (2*) generated by a code reader.

5. The computer system of any one of the previous claims, further comprising:
a code generator (190) configured to generate the unique code (2*) so that the identifier number differs from any previously generated identifier number, and configured to generate an encoded machine readable representation (2) of the unique code.

6. The computer system of any one of the previous claims, wherein the received unique code (2*) is based on a Base 36 encoded sequential number and further includes at least one check letter which is the result of a hash function and a modulo operation applied to the encoded sequential number, the computer system further configured:
to validate (3300) the received unique code by applying the hash function and the modulo operation to the encoded sequential number and comparing the result with the at least one check letter.

7. The computer system of claim 6, wherein the characters of the received unique code (2*) are swapped according to a predefined swapping rule which is associated with the at least one check letter, the at least one check letter not being affected by the predefined swapping rule, the computer system further configured to:
to de-swap (3100) the received unique code before validating (3300) by applying an inverted swapping function, the inverted swapping function being determined in accordance with the pre-defined swapping rule associated with the at least one unaffected check letter.

8. A computer-implemented method (1000) for dynamic website instantiation, comprising:
receiving (1100) from a first code reader device (11) a first read notification (N1) indicating, for the very first time, a unique code (2*) wherein the unique code includes a reference to a URL portion in combination with an identifier number;
receiving (1200) from the first reader device (11) location data (L1) indicating a particular physical location which is associated with the first read notification (N1);
associating (1300) the unique code (2*) with the received location data (L1) and persisting the respective association in a data storage component; and
generating (1400), based on the unique code (2*), a particular URL in relation to the particular physical location, the particular URL instantiating a website for the particular physical location.

9. The method of claim 8, further comprising:
providing (1500), in response to the first read notification, to a user of the first reader device administration rights with regards to the particular URL.

10. The method of any one of the claims 8 to 9, further comprising:
receiving (1600) from a second code reader device a second read notification (N2) indicating, at least for a second time, the unique code;
providing (1700) to the second reader device, in response to the second read notification, access to the particular URL.

11. The method of any one of the claims 8 to 10, further comprising:
preventing access to the particular URL when an access request is received which is not generated in response to a read notification based on the unique code generated by a code reader.

12. The method of any one of the claims 8 to 11, further comprising:
generating (1010) the unique code (2*) so that the identifier number differs from all previously generated identifier numbers of all previously generated unique codes; and
producing (1020) a physical tag which carries an encoded machine readable representation (2) of the unique code (2*).

13. The method of any one of the claims 8 to 12, wherein the unique code (1*, 2*, 3*) is encoded into a machine readable representation (1, 2, 3) selected from the group of: bar code, QR code, RFID code, and acoustic code.

14. The method of any one of the claims 8 to 13, wherein the received unique code (2*) is based on a Base 36 encoded sequential number and further includes at least one check letter which is the result of a hash function and a modulo operation applied to the encoded sequential number, the method further comprising:
validating (3300) the received unique code by applying (3200) the hash function and the modulo operation to the encoded sequential number and comparing the result with the at least one check letter.

15. A computer program product that when loaded into a memory of a computing device and executed by at least one processor of the computing device executes the steps of the computer implemented method according to any one of the claims 8 to 14.
